# EUROPEAN PATENT SPECIFICATION

(11) **EP 1 102 675 B1**
(45) Date of publication and mention of the grant of the patent: **01.12.2004**
(21) Application number: 99935264.4
(22) Date of filing: 19.07.1999
(51) Int. Cl.: B31D 1/02

(54) **A LABEL FEEDER**
ETIKETTENZUFUHREINRICHTUNG
DISPOSITIF D'ALIMENTATION EN ETIQUETTES

(30) Priority: 04.08.1998 SE 9802664
(43) Date of publication of application: 30.05.2001
(73) Proprietor: Lörd, Kent, 272 38 Brantevik (SE)
(72) Inventor: Lörd, Kent, 272 38 Brantevik (SE)
(74) Representative: Petri, Stellan
(86) International application number: PCT/SE1999/001288
(87) International publication number: WO 2000/007807

(56) References cited:
- EP-A1- 0 878 403
- GB-A- 2 303 613
- SE-C2- 507 711
- US-A- 4 900 386
- US-A- 5 713 679

## Description

### Technical Field

The present invention relates to a method at a label feeder.

### Technical Background

When self-adhesive labels with electromagnetic wave information today are applied, the most common method is first to apply a label with electromagnetic wave information and then a graphic label on top thereof. The reason for positioning a graphic label (for example a price label) usually on top thereof is for concealing the label with electromagnetical wave information (for example an alarm). A currently used technique is that at label manufacture, before the labels are stamped out of their carrier web, the combined, self-adhesive label front material web is removed from its carrier web (usually silicon paper), whereupon the label with electromagnetic wave information (for example a label with a memory circuit and an antenna or a coil/capacitor with an antenna) is applied on the adhesive. The self-adhesive front web is then joined with the carrier web, whereupon the label is stamped out of the front web, so that the label with the electromagnetic wave information is below and concealed. This label can then be applied on the product in an ordinary label dispenser. In this case thermo printing or thermo transfer printing is a problem, as this printing requires a plane surface, and with a label with electromagnetic wave information below the surface is uneven.

One technique is to apply the label with electromagnetic wave information in a laminate between two material layers, which gives the same problem as mentioned above.

Another problem today is that each and every mechanical influence or passing of an undesireable electromagnetic field in certain cases influences the stored information or means that it can not receive the desired information. For this reason the influence shall be as small as possible.

The function of the label with electromagnetic wave information is for example to receive information via radio waves and store this information in a memory and then later emit this information via radio waves at another occasion, or that the label has a circuit with coil and capacitor, which in a radio wave field emits a wave length of its own, which then can be indicated as an alarm.

### Objects and Most Important Features of the Invention

The object of the invention is to accomplish a label feeder, which applies a label with electromagnetic wave information under a linerless web, leading to graphic labels. The label feeder can give information to and fetch information from the label with electromagnetic wave information shortly before the graphic label is applied on the product. The linerless label web can be covered with adhesive on one side and with low adhesive substrate on the other side or be partly covered on both sides, both longitudinally or transversly.

By using a label feeder with linerless label material as carrier and as covering element, there is a possibility to print on an even material web and to apply the label with electromagnetic wave information in line before the application on a product, whereby a material saving and thus cheaper design is obtained.

The method according to the invention is defined in claim 1. Advantageous features are covered by sub-claims 2-7.

### Description of Drawings

Fig 1 is a side view of the feeder with a cutter for the web with electromagnetical wave information.
Fig 2 is a side view of the feeder with a carrier web for the labels with electromagnetical wave information.

### Description of Embodiments

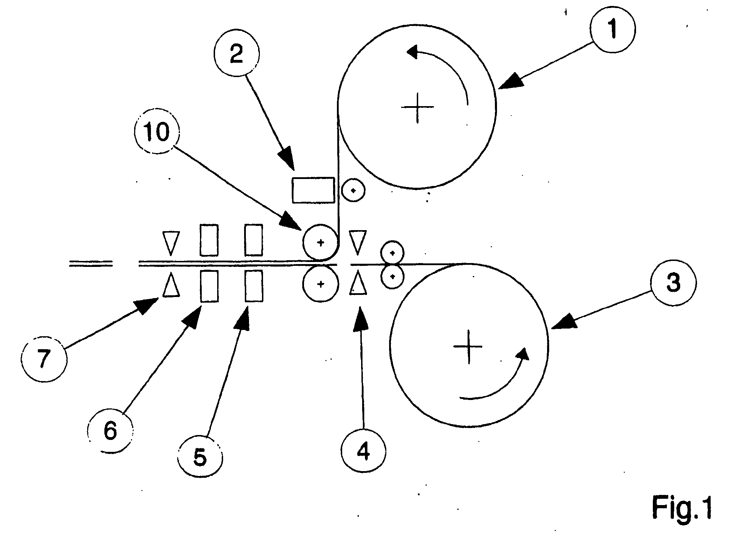

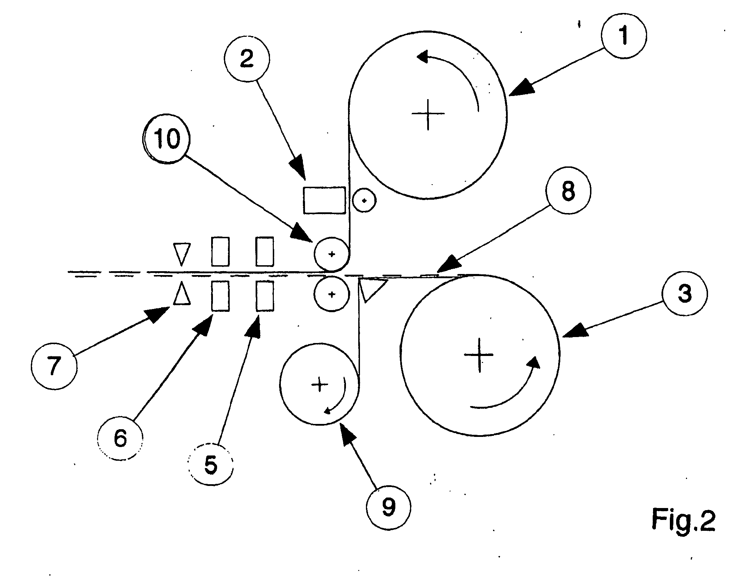

A first linerless material roll is numbered 1 in Figs. 1 and 2. A linerless material is a label material with self-adhesive material on the lower side and with low adhesive material or substrate (usually silicon) on the upper side. The linerless material can have such self-adhesive and low adhesive substrates over its entire surface or only partly. The linerless material (usually of the thermo or thermo transfer type) passes a printer head 2, which adds graphic information.

A label 8 (Fig 2) with electromagnetic wave information (usually a memory circuit or a self-oscillating coil/capacitor) is applied on the lower side of the linerless material. These labels are present as self-adhesive labels 8 on a carrier web in a second roll 3. The empty carrier web is then rolled on a roll 9. A driven roll 10 makes the label with electromagnetic wave information to stick to the adhesive on the linerless web by means of pressure. The combined web then passes a programming station 5, where the label with electromagnetic wave information receives information, via for example radio waves, an information which is then stored. Further, the combined web passes a control station 6, which via for example radio waves controls that the label with electromagnetic wave information functions properly. The combined web finally passes a cutting equipment 7, which cuts the linerless web in suitable labels.

The embodiment of Fig 1 differs from the one of Fig 2 in that the second roll 3 contains a web material, which in itself is adapted to store electromagnetic wave information. A cutting equipment 4 for this web material is provided, before this material is brought together with the linerless label material.

## Claims

1. A method at a label feeder, **characterized in that** self-adhesive linerless label material is unrolled from a first roll (1), is provided with graphic information by a printer head (2) and with its adhesive side is brought against a web material for storing electromagnetic wave information unrolled from a second roll (3) and that the combined web is then cut (7) in suitable lengths for forming labels, consisting only of the material for storing electromagnetic wave information adhered to the linerless label material.

2. A method according to claim 1, **characterized in that** a sender (5) emits digital information via electromagnetic waves to the material for storing electromagnetic wave information.

3. A method according to claim 2, **characterized in that** a control station (6) controls the function of the label with electromagnetic wave information via electromagnetic waves.

4. A method according to any of the preceding claims, **characterized in that** the web material for storing electromagnetic wave information is brought forward and is cut (4) in suitable lengths, before it is combined with the self-adhesive linerless material.

5. A method according to any of claims 1 - 3, **characterized in that** the web material for storing electromagnetic wave information is stamped self-adhesive labels (8) on a carrier web, which is low adhesive treated and is rolled after the labels for storing electromagnetic wave information are dispensed on the linerless material.

6. A method according to any of the preceding claims, **characterized in that** the adhesive or the low adhesive material is applied on only parts of the surface of the linerless material.

7. A method according to any of the preceding claims, **characterized in that** the linerless material is preprinted with colour or information.

## Patentansprüche

1. Verfahren bei einer Etikettenzufuhreinrichtung, **dadurch gekennzeichnet, dass** selbstklebendes decklagenfreies Etikettenmaterial von einer ersten Rolle (1) abgerollt wird, mit Grafikinformation durch einen Druckkopf (2) versehen wird und mit seiner Klebeseite gegen ein Bahnmaterial in Kontakt gebracht wird, wobei das Bahnmaterial zum Speichern von Information mittels elektromagnetischer Wellen geeignet ist und von einer zweiten Rolle (3) abgerollt wird, und dass die zusammengefügte Bahn dann in geeignete Längen zugeschnitten (7) wird, um Etiketten zu bilden, wobei die Bahn nur das zum Speichern von Information mittels elektromagnetischer Wellen vorgesehene Material, gebunden an das decklagenfreie Etikettenmaterial, aufweist.

2. Verfahren nach Anspruch 1, **dadurch gekennzeichnet, dass** ein Sender (5) digitale Informationen über elektromagnetische Wellen an das Material zum Speichern von Information mittels elektromagnetischer Wellen ausgibt.

3. Verfahren nach Anspruch 2, **dadurch gekennzeichnet, dass** eine Steuerstation (6) die Funktion des Etikettes mit mittels elektromagnetischer Wellen verarbeitbarer Information durch elektromagnetische Wellen steuert.

4. Verfahren nach einem der vorherigen Ansprüche, **dadurch gekennzeichnet, dass** das Bahnmaterial zum Speichern von Information mittels elektromagnetischer Wellen vorwärts transportiert wird und in geeignete Längen zugeschnitten (4) wird, bevor es mit selbstklebendem decklagenfreiem Material zusammengefügt wird.

5. Verfahren nach einem der Ansprüche 1-3, **dadurch gekennzeichnet, dass** das Bahnmaterial zum Speichern von Information mittels elektromagnetischer Wellen zugeschnittene, selbstklebende Etiketten (8) auf einer Trägerbahn aufweist, welche schwach klebend behandelt worden ist und abgerollt wird, nachdem die Etiketten zum Speichern von Information mittels elektromagnetischer Wellen auf das decklagenfreie Material aufgebracht worden sind.

6. Verfahren nach einem der vorherigen Ansprüche, **dadurch gekennzeichnet, dass** das klebende oder schwach klebende Material nur auf Teile der Oberfläche des decklagenfreien Materials aufgebracht wird.

7. Verfahren nach einem der vorhergehenden Ansprüche, **dadurch gekennzeichnet, dass** das decklagenfreie Material mit Farbe oder Information vorbedruckt ist.

## Revendications

1. Procédé à un distributeur d'étiquettes, **caractérisé en ce qu'**un matériau d'étiquettes autoadhésif sans doublure est dévidé d'un premier rouleau (1), est doté d'informations graphiques par une tête d'impression (2) et, avec sa face adhésive, est amené contre un matériau en bande continue pour stocker des informations sous forme d'ondes électromagnétiques dévidé d'un deuxième rouleau (3) et **en ce que** la bande continue combinée est ensuite coupée (7) en des longueurs appropriées pour former des étiquettes, consistant uniquement en le matériau pour stocker des informations sous forme d'ondes électromagnétiques collé au matériau d'étiquettes sans doublure.

2. Procédé selon la revendication 1, **caractérisé en ce qu'**un émetteur (5) émet des informations numériques via des ondes électromagnétiques jusqu'au matériau pour stocker les informations sous forme d'ondes électromagnétiques.

3. Procédé selon la revendication 2, **caractérisé en ce qu'**un poste de contrôle (6) contrôle via des ondes électromagnétiques le fonctionnement de l'étiquette dotée d'informations sous forme d'ondes électromagnétiques.

4. Procédé selon l'une quelconque des revendications précédentes, **caractérisé en ce que** le matériau en bande continue pour stocker des informations sous forme d'ondes électromagnétiques est amené vers l'avant et est coupé (4) en des longueurs appropriées, avant d'être combiné avec le matériau d'étiquettes autoadhésif sans doublure.

5. Procédé selon l'une quelconque des revendications 1 à 3, **caractérisé en ce que** le matériau en bande continue pour stocker des informations sous forme d'ondes électromagnétiques consiste en étiquettes autoadhésives estampées (8) sur une bande continue de support, qui est faiblement adhésive et est enroulée une fois que les étiquettes de stockage d'informations sous forme d'ondes électromagnétiques sont distribuées sur le matériau sans doublure.

6. Procédé selon l'une quelconque des revendications précédentes, **caractérisé en ce que** le matériau adhésif ou faiblement adhésif est appliqué uniquement sur des parties de la surface du matériau sans doublure.

7. Procédé selon l'une quelconque des revendications précédentes, **caractérisé en ce que** le matériau sans doublure a reçu par pré-impression des couleurs ou des informations.
